(19) Europäisches Patentamt
European Patent Office
Office européen des brevets

(11) Veröffentlichungsnummer: **0 278 334 B1**

(12) # EUROPÄISCHE PATENTSCHRIFT

(45) Veröffentlichungstag der Patentschrift: **07.01.93**

(51) Int. Cl.⁵: **C08G 18/66**, C08G 18/32, C08G 18/48, C08G 18/64

(21) Anmeldenummer: **88101277.7**

(22) Anmeldetag: **29.01.88**

(54) **Verfahren zur Herstellung von Formkörpern, hierzu geeignete Gemische von gegenüber Isocyanatgruppen reaktionsfähigen Verbindungen und die nach dem Verfahren erhaltenen Formkörper.**

(30) Priorität: **07.02.87 DE 3703739**

(43) Veröffentlichungstag der Anmeldung:
**17.08.88 Patentblatt 88/33**

(45) Bekanntmachung des Hinweises auf die Patenterteilung:
**07.01.93 Patentblatt 93/01**

(84) Benannte Vertragsstaaten:
**BE DE ES FR GB IT NL SE**

(56) Entgegenhaltungen:
**US-A- 4 519 965**
**US-A- 4 540 750**

(73) Patentinhaber: **BAYER AG**

**W-5090 Leverkusen 1 Bayerwerk(DE)**

(72) Erfinder: **Weber, Christian, Dr.**
**Paul-Klee-Strasse 68a**
**W-5090 Leverkusen 1(DE)**
Erfinder: **Schäfer, Hermann, Dr.**
**Suerderstrasse 27**
**W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 278 334 B1

## Beschreibung

Die vorliegende Erfindung betrifft ein verbessertes Einstufen-Verfahren zur Herstellung elastischer Formkörper mit einer geschlossenen Oberflächenschicht mittels der Reaktionsspritzgußtechnik, in welchem hochreaktive Systeme aus Polyisocyanaten, höhermolekularen Polyhydroxyl(polyamino)verbindungen und Polyaminen eingesetzt werden, die hierzu geeigneten Gemische von gegenüber Isocyanatgruppen reaktionfähigen Verbindungen und die nach dem Verfahren erhaltenen Formkörper.

Die Herstellung von elastischen Formkörpern mit einer geschlossenen Oberflächenschicht mittels der Reaktionsspritzgußtechnik aus den genannnten Ausgangsmaterialien ist bereits bekannt (vgl. z.B. DE-AS 2 622 951 (US-PS 4 218 543), EP-A-00 81 701, US-PS 4 296 212, US-PS 4 324 867 oder US-PS 4 374 210).

Bei geeigneter Wahl der Ausgangskomponenten ist es nach diesen Verfahren möglich, sowohl elastische als auch starre Produkte bzw. alle dazwischenliegende Varianten herzustellen.

Die resultierenden Formkörper werden beispielsweise in der Schuhindustrie als Sohlen oder insbesondere in der Automobilindustrie als Karosserieteile eingesetzt. Die Verarbeitung der Rohstoffe erfolgt nach dem sogenannten Reaktionsspritzgußverfahren (RSG-Verfahren). Es handelt sich hierbei um eine Fülltechnik, bei der die hochreaktiven, flüssigen Ausgangskomponenten über Hochdruckdosieraggregate mit großer Austragsleistung nach Vermischen in sogenannten zwangsgesteuerten Mischköpfen in kürzester Zeit in die Form eingespritzt werden. So wird beispielsweise in der DE-AS 2 622 951 beschrieben, wie man selbst extrem reaktive Systeme, also one-shot-Gemische aus bei Raumtemperaturen flüssigen Di- oder Polyisocyanaten auf Basis von 4,4′-Diisocyanatodiphenylmethan, aktiven aromatischen Polyaminen, höhermolekularen Polyhydroxylverbindungen mit primären Hydroxylgruppen und starken Katalysatoren, mit Startzeiten bis herab zu weniger als einer Sekunde, verarbeiten kann.

Die Verfestigung des Reaktionsgemisches nach Schußende erfolgt dabei so schnell, daß bei extrem reaktiven Ansätzen bereits nach 5 Sekunden die Form geöffnet und das Teil entformt werden kann.

One-shot-Gemische aus einer Polyisocyanatkomponente, aktiven aromatischen Diaminen und Polyethern mit primären und/oder sekundären Aminogruppen führen bei Verarbeitung nach dem RSG-Verfahren zu Polyharnstoff-Elastomeren (vgl. z.B. die EP-A-0 081 701).

Für einen Einsatz als Werkstoff für Karosserieelemente wird eine hohe Steifigkeit der Polyharnstoff-Elastomeren gefordert. Durch Mitverwendung von Glykolen als Co-Kettenverlängerer kann die Biegesteifigkeit erhöht werden, gleichzeitig werden jedoch die thermischen Eigenschaften der Formteile, wie Biegemodul bei hoher und niedriger Temperatur sowie Wärmestand (sag) nachteilig verändert.

Einer Anhebung des Anteils an Diamin-Kettenverlängerer im one-shot-System sind ebenfalls Grenzen gesetzt. Unter normalen Verarbeitungsbedingungen (50-70° C Werkzeugtemperatur) resultieren Formteile, die aufgrund ihrer Sprödigkeit selbst nach langer Formstandzeit nicht "intakt" entformbar sind. So ist z.B. bei Materialien auf Basis des in großem Maßstab eingesetzten Diethyltoluylendiamin (DETDA) eine Erhöhung des Biegemoduls von ca. 350 MPa (bei Verwendung von höhermolekularen Polyhydroxylverbindungen) bis 550 MPa (bei Verwendung von Polyethern mit aromatisch gebundenen Aminogruppen als höhermolekulare Reaktionspartner für die Polyisocyanate, in beiden Fällen entsprechend 23-25 Gew.-% DETDA bezogen auf alle aktive Wasseratome enthaltenden Bestandteile der Reaktionsmischung) ohne Einsatz von Füllstoffen nicht möglich. Bei Mitverwendung von Füllstoffen, insbesondere von Glasfaserfüllstoffen ist bei diesen Verfahren des Standes der Technik allenfalls ein Biegemodul von ca. 1000 bis 1500 MPa (entsprechend der zuletzt genannten maximalen Menge DETDA in dem Reaktionsgemisch) erreichbar.

Das Verfahren der DE-OS 3 520 326 stellt isofern einen wesentlichen Fortschritt gegenüber den oben diskutierten Verfahren des Standes der Technik dar, als es durch Erhöhung der Werkzeugtemperatur von dem üblichen Bereich von ca. 50 bis 70° C auf mindestens 105° C den Einsatz von Diamin-Kettenverlängerungsmitteln in erhöhter Konzentration unter Beibehaltung einer einwandfreien Entformbarkeit oder Formkörper und damit eine wesentliche Erhöhung des Biegemoduls gestattet. Nachteilhaft bei diesem Verfahren ist jedoch, daß das Verfahren bei völlig unüblichen, hohen Formtemperaturen durchgeführt werden muß und insbesondere, daß bei diesen hohen Formtemperaturen die im allgemeinen mitverwendeten inneren Formtrennmittel, insbesondere jene auf Basis von Kombinationen aus Zinkcarboxylaten wie z.B. Zinkstearat und aliphatischen Polyaminen ihre Wirksamkeit weitgehend verlieren.

Es war daher wie der Erfindung zugrundeliegende Aufgabe, ein verbessertes Verfahren zur Herstellung von elastischen Formkörpern mit einer geschlossenen Oberflächenschicht mittels der Reaktionsspritzgußtechnik unter Verwendung der obengennanten Ausgangsmaterialien zur Verfügung zu stellen, welches folgende Vorteile in sich vereint:

- Das Verfahren sollte die Herstellung von Formkörpern gestatten, welche bei Raumtemperatur einen deutlich über 400 MPa liegenden Biegemodul aufweisen.
- Die Formkörper sollten eine einwandfreie Entformbarkeit (ausreichende "green strength") aufweisen.

- Die üblichen inneren Formtrennmittel sollten auch bei dem neuen Verfahren verwendbar sein, ohne (wegen zu hohen Formtemperaturen) ihre Wirksamkeit ganz oder teilweise einzubüßen.

Diese Aufgabe konnte durch die Bereitstellung des nachstehend näher beschriebenen erfindungsgemäßen Verfahrens gelöst werden. Wie nämlich überraschend gefunden wurde, gelingt die Herstellung von Formkörpern, die den genannten Anforderungen genügen dann, wenn in dem Reaktionsgemisch bestimmte, nachstehend näher beschriebene Umsetzungsprodukte von Polyepoxiden mit aromatischen Diaminen mitverwendet werden.

Obwohl in der US-PS 4 540 750 Umsetzungsprodukte aus aromatischen Diaminen und Polyepoxiden beschrieben werden, die bezüglich ihrer chemischen Zusammensetzung den nachstehend näher beschriebenen erfindungswesentlichen Komponenten b3) entsprechen, können die erfindungsgemäß aufgefundenen Zusammenhänge als überraschend bezeichnet werden, da die genannte Vorveröffentlichung ein völlig andersartiges technisches Sachgebiet betrifft, so daß der Vorveröffentlichung keinerlei richtungsweisende Hinweise auf die erfindungsgemäßen Zusammenhänge entnommen werden können. Die US-PS 4 540 750 befaßt sich nämlich mit der Verwendung der genannten Umsetzungsprodukte als Härter für Epoxid- und Urethanharze, wie sie als Beschichtungsmittel oder zur Herstellung von Laminaten, insbesondere in der Elektro-oder Bauindustrie eingesetzt werden. Das Reaktionsspritzgußverfahren zur Herstellung von Formkörpern in geschlossenen Formen und die ganz speziellen, mit diesem Verfahren zusammenhängenden Probleme werden in der Vorveröffentlichung mit keinem Wort angesprochen.

Gegenstand der Erfindung ist ein Verfahren zur Herstellung von elastomeren Formkörpern auf Polyurethan- oder Polyharnstoff-Basis des Dichtebereichs 0,8 bis 1,4 g/cm$^3$ durch Umsetzung in geschlossenen Formen eines Reaktionsgemischs bestehend aus

a) einer Polyisocyanatkomponente, bestehend aus mindestens einem Di- oder Polyisocyanat mit ausschließlich aromatisch gebundenen Isocyanatgruppen,

b) einem Gemisch von Verbindungen mit gegenüber Isocyanatgruppen reaktionsfähigen Gruppen enthaltend

b1) gegebenenfalls Gemische darstellende Polyalkylenpolyether mit einem zahlenmittleren Molekulargewicht zwischen 1800 und 12000, welche mindestens zwei gegenüber Isocyanatgruppen reaktionsfähige Gruppen aufweisen und

b2) gegebenenfalls mindestens ein Diamin mit zwei primären und/oder sekundären, aromatisch gebundenen Aminogruppen des Molekulargewichtsbereichs 108 bis 400,

und

c) gegebenenfalls weitere an sich bekannte Hilfsund Zusatzmittel, mit der Maßgabe, daß im Falle der Verwendung von Hydroxylgruppen aufweisenden Aufbaukomponenten b1) Katalysatoren in einer Menge von 0,001 bis 10 Gew.-%, bezogen auf die Menge der Komponente b) eingesetzt werden, und wobei im Falle der Mitverwendung von Füllstoffen als Komponente c) oder als Teil der Komponente c) diese in einer Menge von bis zu 100 Gew.-% der Komponente b) zum Einsatz gelangen,

wobei die Komponenten a) bis c) als one-shot-System nach der Reaktionsspritzgußtechnik unter Einhaltung einer Isocyanatkennzahl von 70 bis 130 verarbeitet werden, dadurch gekennzeichnet, daß die Komponente b) als weiteren Bestandteil

b3) mindestens ein Reaktionsprodukt von

(i) mindestens einem Polyepoxid des Epoxidäquivalentgewichtsbereichs 76 bis 550 welches mindestens zwei Epoxidgruppen aufweist

mit

(ii) mindestens einem aromatischen Diamin der unter b2) genannten Art enthält,

wobei bei der Herstellung dieses Reaktionsprodukts pro Mol Epoxidgruppen der Komponente (i) mindestens 1 Mol Diamin (ii) eingesetzt worden sind, und wobei die Komponente b3) in einer solchen Menge verwendet wird, die einen Anteil der Epoxidverbindung (i), bezogen auf das Gesamtgewicht der Komponente b) von 0,5 bis 25 Gew.-% entspricht.

Gegenstand der Erfindung sind auch zur Durchführung dieses Verfahrens geeignete Gemische enthaltend

b) ein Gemisch von Verbindungen mit gegenüber Isocyanatgruppen reaktionsfähigen Gruppen enthaltend

b1) gegebenenfalls Gemische darstellende Polyalkylenpolyether mit einem Molekulargewicht zwischen 1800 und 12000, welche mindestens zwei gegenüber Isocyanatgruppen reaktionsfähige Gruppen aufweisen und

b2) gegebenenfalls mindestens ein Diamin mit zwei primären und/oder sekundären, aromatisch gebundenen Aminogruppen des Molekulargewichtsbereichs 108 bis 400,

und

c) gegebenenfalls weitere an sich bekannte Hilfs-und Zusatzmittel, mit der Maßgabe, daß im Falle des Vorliegens von Hydroxylgruppen aufweisenden Aufbaukomponenten b1) Katalysatoren in einer Menge von 0,001 bis 10 Gew.-%, bezogen auf die Menge der Komponente b) eingesetzt werden, und wobei im Falle des Vorliegens von Füllstoffen als Komponente c) oder als Teil der Komponente c) diese in einer Menge von bis zu 100 Gew.-% der Komponente b) zum Einsatz gelangen,

wobei die Komponenten a) bis c) als one-shot-System nach der Reaktionsspritzgußtechnik unter Einhaltung einer Isocyanatkennzahl von 70 bis 130 verarbeitet werden, dadurch gekennzeichnet, daß die Komponente b) als weiteren Bestandteil

b3) mindestens ein Reaktionsprodukt von

(i) mindestens einem Polyepoxid des Epoxidäquivalentgewichtsbereichs 76 bis 550 welches mindestens zwei Epoxidgruppen aufweist

mit

(ii) mindestens einem aromatischen Diamin der unter b2) genannten Art enthält,

wobei bei der Herstellung dieses Reaktionsprodukts pro Mol Epoxidgruppen der Komponente (i) mindestens 1 Mol Diamin (ii) eingesetzt worden sind, und wobei die Komponente b3) in ainer solchen Menge verwendet wird, die einen Anteil der Epoxidverbindung (i), bezogen auf das Gesamtgewicht der Komponente b) von 0,5 bis 25 Gew.-% entspricht.

Gegenstand der Erfindung sind schließlich auch die gemäß diesem Verfahren erhaltenen Formkörper.

Im Rahmen der Erfindung sollen unter "Formkörpern auf Polyurethan-Basis" solche Kunststoffe verstanden werden, die neben Urethangruppen auch Harnstoffgruppen aufweisen. Der Begriff "Formkörper auf Polyharnstoff-Basis" steht für Urethangruppen-freie Polyharnstoff-Kunststoffe.

Als erfindungsgemäß einzusetzende Ausgangskomponente a) kommen beliebige Di-oder Polyisocyanate mit ausschließlich aromatisch gebundenen Isocyanatgruppen in Betracht. Vorzugsweise werden als Komponente a) bei Raumtemperatur flüssige Di- oder Polyisocyanate auf Basis von Diisocyanatodiphenylmethan eingesetzt. Hierzu gehören beispielsweise

1. bei Raumtemperatur flüssige Gemische aus 2,4'- und 4,4'-Diisocyanatodiphenylmethan, die gegebenenfalls geringe Anteile an 2,2'-Diisocyanatodiphenylmethan enthalten können;

2. bei Raumtemperatur flüssige Polyisocyanatgemische der Diphenylmethanreihe, wie sie in an sich bekannter Weise durch Phosgenierung von Anilin/Formaldehyd-Kondensaten erhalten werden, und die neben Diisocyanaten der unter 1. genannten Art bis zu 30, vorzugsweise bis zu 10 Gew.-%, bezogen auf Gesamtgemisch an höheren, mehr als zwei Isocyanatgruppen aufweisende Homologe dieser Diisocyanate enthalten;

3. bei Raumtemperatur flüssige, Urethangruppen aufweisende Polyisocyanate, wie sie durch Umsetzung der unter 1. und 2. genannten Di- und Polyisocyanate oder von bei Raumtemperatur festem 4,4'-Diisocyanatodiphenylmethan mit unterschüssigen Mengen an niedermolekularen Diolen oder Triolen, vorzugsweise Polypropylenglykolen mit einem Molekulargewicht von maximal 700 zugänglich sind, insbesondere die Umsetzungsprodukte von 4,4'-Diisocyanatodiphenylmethan mit 0,05 bis 0,3 Mol, pro Mol Diisocyanat, an Di-und/oder Tripropylenglykol;

4. bei Raumtemperatur flüssige Carbodiimid- und/oder Uretonimingruppen aufweisende Modifizierungsprodukte der unter 1. und 2. genannten Di- und Polyisocyanate oder auch von bei Raumtemperatur festem 4,4'-Diisocyanatodiphenylmethan oder

5. bei Raumtemperatur flüssige NCO-Semiprepolymere, wie sie durch Umsetzung der unter 1. und 2. genannten Di-und Polyisocyanate oder durch Umsetzung von reinem 4,4'-Diisocyanatodiphenylmethan mit unterschüssigen Mengen an oganischen Polyhydroxylverbindungen unter Einhaltung eines Äquivalentverhältnisses von Isocyanatgruppen zu Hydroxylgruppen von 1:0,01 bis 1:0,5, vorzugsweise 1:0,015 bis 1:0,25 erhalten werden, wobei als Polyhydroxylverbindungen beispielsweise solche der gegebenenfalls in der Komponente b) vorliegenden Art verwendet werden. Die Herstellung derartiger NCO-Semiprepolymere ist beispielsweise in der US-PS 4 374 210 beschrieben.

Zu den besonders bevorzugten, beim erfindungsgemäßen Verfahren einzusetzenden Polyisocyanaten gehören die gemäß DE-PS 1 618 380 erhältlichen Umsetzungsprodukte von 1 Mol 4,4'-Diisocyanatodiphenylmethan mit 0,05 bis 0,3 Mol an Polypropylenglykolen mit einem maximalen Molekulargewicht von 700, vorzugsweise mit Di- und/oder Tripropylenglykol, sowie die Carbodiimid- und/oder Uretonimingruppen aufweisenden, bei Raumtemperatur flüssigen Diisocyanate auf Basis von 4,4'-Diisocyanatodiphenylmethan und gegebenenfalls 2,4'-Diisocyanatodiphenylmethan, wie sie beispielsweise gemäß DE-PS 1 092, 007, DE-OS 2 537 685, US-PS 3 384 653, US-PS 3 449 256, US-PS 4 154 752 oder EP-A-00 57 862 zugänglich sind. Selbstverständlich können beim erfindungsgemäßen Verfahren als Komponente a) auch beliebige Gemische der beispielhaft genannten Polyisocyanate eingesetzt werden.

Bei den erfindungsgemäßen einzusetzenden Ausgangskomponenten b) handelt es sich um Abmischungen der Einzelkomponenten b1) und b2) mit der erfindungswesentlichen Komponente b3).

Bei der Komponente b1) handelt es sich um organische Verbindungen mit einem Molekulargewicht zwischen 1800 und 12000, welche mindestens zwei gegenüber Isocyanatgruppen reaktionsfähige Gruppen aufweisen. Es handelt sich um Polyalkylenpolyether des genannten Molekulargewichtsbereichs, insbesondere des Molekulargewichtsbereichs 3000 bis 7000, mit Hydroxyl- und/oder Aminogruppen als gegenüber Isocyanatgruppen reaktionsfähige Gruppen. Im Falle der Verwendung von Polyethergemischen können einzelne Komponenten des Gemischs auch ein unter 1800, beispielsweise ein zwischen 500 und 1800 liegendes Molekulargewicht aufweisen, vorausgesetzt, daß das mittlere Molekulargewicht des Gemischs innerhalb der zuletzt genannten Bereiche liegt. Die Verwendung derartiger Gemische mit Einzelkomponenten mit einem unter 1800 liegenden Molekulargewicht ist allerdings weniger bevorzugt.

Die erfindungsgemäß als Komponente b1) in Frage kommenden, mindestens zwei, vorzugsweise zwei bis drei Hydroxylgruppen aufweisenden Polyether sind solche der ansich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, 4,4'-Dihydroxydiphenylpropan, Anilin, Ethanolamin oder Ethylendiamin hergestellt. Auch Sucrosepolyether, wie sie z.B. in den deutschen Auslegeschriften 11 76 358 und 10 64 938 beschrieben werden, kommen erfindungsgemäß in Frage. Vielfach sind solche Polyether bevorzugt, die überwiegend (zumindest zu 50 %, oftmals bis zu 90 %, bezogen auf alle vorhandenen OH-Gruppeen im Polyether) primäre Hydroxylgruppen aufweisen. Auch durch Vinylpolymerisate modifizierte Polyether, wie sie z.B. durch Polymerisation von Styrol und Acrylnitril in Gegenwart von Polyethern entstehen (amerikanische Patentschriften 33 83 351, 35 04 273, 35 23 093, 31 10 695, deutsche Patentschrift 11 52 536), sind geeignet, ebenso OH-Gruppen aufweisende Polybutadiene. Zu den bevorzugten Polyhyroxypolyethern gehören insbesondere Alkoxylierungsprodukte der beispielhaft genannten di-und/oder trifunktionellen Startermoleküle unter Verwendung von Ethylenoxid und/oder Propylenoxid, wobei die genannten Alkylenoxide im Gemisch oder in beliebiger Reihenfolge eingesetzt werden können, allerdings sind reine Polyethylenoxid-Polyether weniger bevorzugt. Die bevorzugten Polyetherpolyole mit überwiegend primären Hydroxylgruppen werden in an sich bekannter Weise durch Aufpfropfen von Ethylenoxid am Kettenende erhalten.

Bei den erfindungsgemäß in Frage kommenden Polyethern können die endständigen gegenüber Isocyanatgruppen reaktionsfähigen Gruppen auch teilweise oder ausschließlich, z.B. zu 50, vorzugsweise zu 80-100 Äquivalentprozent aus primären und/oder sekundären aromatisch oder aliphatisch, vorzugsweise aromatisch gebundenen Aminogruppen und zum Rest aus primären und/oder sekundären, aliphatisch gebundenen Hydroxylgruppen bestehen. In diesen Verbindungen können die die Aminogruppen tragenden, endständigen Reste mit der Polyetherkette auch über Urethan-oder Estergruppen verknüpft sein. Die Herstellung dieser "Aminopolyether" erfolgt in an sich bekannter Weise. So kann beispielsweise eine Aminierung von Polyhydroxypolyethern wie z.B. Polypropylenglykolethern durch Reaktion mit Ammoniak in Gegenwart von Raney-Nickel und Wasserstoff durchgeführt werden (BE-PS 634 741). US-PS 3 654 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-PS 1 193 671 wird die Herstellung von Polyethern mit Amino-Endgruppen durch Hydrierung von cyanethylierten Polyoxypropylenethern beschrieben. Weitere Methoden zur Herstellung von Polyoxyalkylen-(Polyether)-aminen sind in US-PS 3 155 728, US-PS 3 236 895 und FR-PS 1 551 605 beschrieben. In der FR-PS 1 466 708 wird beispielsweise die Herstellung von sekundäre Amino-Endgrupen aufweisenden Polyethern beschrieben.

Höhermolekulare Polyhydroxylpolyether können auch durch Reaktion mit Isatosäureanhydrid in die entsprechenden Anthranilsäureester überführt werden, wie dies beispielsweise in DE-OS 2 019 432, DE-OS 2 619 840, US-PS 3 808 250, US-PS 3 975 428 oder US-PS 4 016 143 beschrieben ist. Auf diese Weise entstehen Polyether mit endständigen aromatischen Aminogruppen.

Durch Umsetzung von NCO-Präpolymeren auf Basis von Polyhydroxypolyethern mit Hydroxylgruppen aufweisenden Enaminen, Aldiminen oder Ketiminen und anschließende Hydrolyse erhält man DE-OS 2 546 536 bzw. US-PS 3 865 791 höhermolekulare, endständige Aminogruppen aufweisende Verbindungen.

Bevorzugt eingesetzt werden Aminopolyether, die nach DE-OS 2 948 419 durch Hydrolyse von endständigen Isocyanatgruppen aufweisenden Verbindungen erhalten werden. Bei diesem Verfahren werden vorzugsweise zwei oder drei Hydroxylgruppen aufweisende Polyether mit Polyisocyanaten zu NCO-Präpolymeren umgesetzt und in einem zweiten Schritt die Isocyanatgruppe durch Hydrolyse in eine Aminogruppe überführt.

Die erfindungsgemäß als Komponente b1) einsetzbaren "Aminopolyether" stellen oftmals Gemische der beispielhaft genannten Verbindungen dar und weisen (im statistischen Mittel) zwei bis drei endständige, gegenüber Isocyanatgruppen reaktionsfähige Gruppen auf.

Die beispielhaft genannten "Aminopolyether" können beim erfindungsgemäß Verfahren gegebenenfalls auch in Abmischung von Aminogruppen-freien Polyhydroxypolyethern der in US-PS 4 218 543 beispielhaft genannten Art eingesetzt werden, obwohl dies weniger bevorzugt ist.

Gegebenenfalls anteilweise können erfindungsgemäß auch Hydroxylgruppen aufweisende Polyester, Polythioether, Polyacetale, Polycarbonate oder Polyesteramide mitverwendet werden, wie sie für die Herstellung von homogenen und von zellförmigen Polyurethanen an sich bekannt sind.

Erfindungsgemäß können auch Polyhydroxyl-(polyamino)-Verbindungen eingesetzt werden, in welchen hochmolekulare Polyaddukte bzw. Polykondensate in feindisperser oder gelöster Form enthalten sind.

Selbstverständlich können erfindungsgemäß als Ausgangskomponente b1) auch beliebige Gemische der beispielhaft genannten Verbindungen mit gegenüber Isocyanatgruppen reaktionsfähigen Gruppen eingesetzt werden.

Bei der Komponente b2) handelt es sich um Diamine mit zwei primären und/oder sekundären, aromatisch gebundenen Aminogruppen des Molekulargewichtsbereichs 108 bis 400. Vorzugsweise werden solche aromatischen Diamine des genannten Molekulargewichtsbereichs eingesetzt, die zumindest in jeweils einer ortho-Stellung zu den Aminogruppen einen Alkylsubstituenten aufweisen und bei welchen die Reaktivität der Aminogruppen gegenüber Isocyanaten nicht durch Elektronen anziehende Substituenten wie z.B. Halogen, Ester-, Ether- oder Disulfidgruppen herabgesetzt ist, wie es z.B. beim Methylen-bis-chloranilin (Moca) der Fall ist.

Besonders bevorzugt werden solche derartige Diamine eingesetzt, die in ortho-Stellung zu der ersten Aminogruppe mindestens einen Alkylsubstituenten mit vorzugsweise 1 bis 4, insbesondere 1 bis 3 Kohlenstoffatomen und in ortho-Stellung zur zweiten Aminogruppe zwei Alkylsubstituenten mit vorzugsweise 1 bis 4, insbesondere 1 bis 3 Kohlenstoffatomen, aufweisen, besonders bevorzugt um solche, die in jeweils mindestens einer ortho-Stellung zu den Aminogruppen einen Ethyl-, n-Propyl- und/oder iso-Propyl-Substituenten und gegebenenfalls in weiteren ortho-Stellungen zu den Aminogruppen Methylsubstituenten aufweisen.

Beispiele für bevorzugte bzw. besonders bevorzugte Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3′,5′-Tetraethyl-4,4′-diaminodiphenylmethan, 3,5,3′,5′-Tetraisopropyl-4,4′-diaminophenylmethan oder 3,5-Diethyl-3′,5′-diisopropyl-4,4′-diaminodiphenylmethan, 1,3-Diamino-2-t-butyl-4,6-dimethylbenzol, 1,3-Diamino-2,4-dimethyl-6-t-butyl-benzol und aus diesen beiden Isomeren bestehende Gemische. Besonders bevorzugt sind 1-Methyl-3,5-diethyl-2,4-diaminobenzol oder dessen bei Raumtemperatur flüssige technische Gemische mit vorzugsweise bis zu 35 Gew.-%, bezogen auf Gemisch, an 1-Methyl-3,5-diethyl-2,6-diaminobenzol (DETDA). Ferner sind ebenfalls geeignet die in US-PS 4 324 867 oder die in EP-A-00 69 286 beispielhaft genannten alkylsubstituierten aromatischen Diamine. Beim erfindungsgemäßen Verfahren können als Komponente b2) selbstverständlich auch beliebige Gemische der beispielhaft genannten alkylsubstituierten aromatischen Diamine eingesetzt werden.

Bei der erfindungswesentlichen Komponente b3) handelt es sich um Reaktionsprodukte von (i) mindestens einem Polyepoxid, welches mindestens zwei, vorzugsweise 2 bis 4 und vorzugsweise 2 bis 3 Epoxidgruppen pro Molekül und ein Epoxidäquivalentgewicht von 76 bis 550, vorzugsweise 100 bis 250 aufweist, mit (ii) Diaminen oder Diamingemischen der unter b2) beispielhaft genannten Art.

Geeignete Polyepoxide (i) sind beliebige, mindestens zwei 1,2-Epoxidgruppen aufweisende aliphatische, cycloaliphatische, aromatische oder heterocyclische Verbindungen oder deren Gemische. In Betracht kommen beispielsweise Polyglycidylether mehrwertiger Phenole, beispielsweise von Brenzkatechin, Resorcin, Hydrochinon, 4,4′-Dihydroxydiphenylmethan, von 4,4′-Dihydroxy-3,3′-dimethyldiphenylmethan, von 4,4′-Dihydroxydiphenylmethan, 4,4′-Dihydroxy-3,3′-dimethyldiphenylpropan, von 4,4′-Dihydroxydiphenyl, aus 4 ,4′-Dihydroxydiphenylsulfon,von Tris-(4-hydroxyphenyl)-methan, den Chlorierungs- und Bromierungsprodukten der vorstehend genannten Diphenole, von Novolacken (d.h. aus Umsetzungsprodukten von ein-oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britisches Patent 1 017 612 (oder von Polyphenolen, die durch Kölndensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N′-Dimethyl-N,N′-diepoxypropyl-4,4′-diaminodiphenylmethan, N-Diepoxypropyl-4-amino-phenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N′-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefin, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß solche Polyepoxide verwendet, die mindestens einen aromatischen oder cycloaliphatischen Ring aufweisen. Hierzu gehören beispielsweise Polyglycidylether mehrwertiger Phenole, insbesondere von Bisphenol A; Polyepoxidverbindungen auf der Basis von aromatischen Aminen, insbesondere N,N-Bis(epoxypropyl)-anilin, N,N′-Dimethyl-N,N′-bis-(epoxypropyl)-4,4′-diaminodiphenylmethan und N,N-Bis-(epoxypropyl)-4-amino-phenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan, 3,4-Epoxycyclohexylmethan-3,4-epoxycyclohexan-carboxylat.

Besonders bevorzugt Polyepoxide sind solche, die mindestens einen aromatischen Ring im Molekül aufweisen wie beispielsweise der Diglycidylether von Bisphenol A bzw. dessen technischen Gemische mit seinen höheren Homologen oder N,N-Bis-(epoxypropyl)-anilin.

Flüssige Polyepoxide oder niedrigviskose Diepoxide, wie Bis-(N-epoxipropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Bei der Herstellung der Reaktionsprodukte b3) kommen die Einzelkomponenten (i) und (ii) in solchen Mengen zum Einatz, daß auf jede Epoxidgruppe der Komponente (i) mindestens 1 Mol der Komponente (ii) entfällt. Die Verwendung eines hohen Diamin-Überschusses bei hierbei selbstverständlich ebenfalls möglich. Auf diese Weise wäre es auch denkbar, ein (mit der Komponente b1) abzumischendes) Gemisch aus den Einzelkomponenten b2) und b3) "in situ" herzustellen, da bei Verwendung eines Diaminüberschusses bei der Herstellung der Komponente b3) automatisch ein Gemisch aus dem Reaktionsprodukt b3) mit Diaminen b2) entsteht.

Nur bei Verwendung eines vergleichsweise geringen Diamin-Überschusses oder bei Einsatz von lediglich einem Mol Diamin pro Mol Epoxidgruppen bei der Herstellung der Komponente b3) ist es bei der Herstellung der Abmischung b) erforderlich, dem Gemisch weitere Diamine b2) separat zuzumischen, falls die Abmischung b) überhaupt derartige freie Diamine b2) enthalten soll.

Die Herstellung des Reaktionsprodukts b3) erfolgt im allgemeinen innerhalb des Temperaturbereichs von ca. 50 bis 180° C, vorzugsweise 80 bis 150° C unter Rühren des aus den Ausgangskomponenten (i) und (ii) gebildeten Reaktionsgemisches. Das Ende der Umsetzung kann durch das Abfallen der Reaktionstemperatur erkannt werden.

Das zur Herstellung der Komponente b3) verwendete Diamin (ii) braucht selbstverständlich nicht mit der Komponente b2) identisch zu sein, jedoch werden im allgemeinen sowohl als Komponente b2) als auch als Komponente (ii) gleiche Diamine der biespielhaft genannten Art eingesetzt.

Die Menge der in der Komponente b) frei und in der Komponente b3) chemisch gebunden vorliegenden Diamine beträgt im allgemeinen insgesamt 5 bis 50, vorzugsweise 8 bis 35 Gew.-%, besonders bevorzugt 20 bis 35 Gew.-%, bezogen auf das Gesamt gewicht der Komponente b). Die Menge des Reaktionsprodukts b3) entspricht im allgemeinen einem Anteil der Epoxidverbindung (i), bezogen auf das Gesamtgewicht

der Komponente b), von 0,5 bis 25, vorzugsweise 3 bis 20 Gew.-%. Vorzugsweise liegen in den Gemischen b) neben den in der Komponente b3) chemisch gebundenen Diaminen bis zu 45 Gew.-%, insbesondere 5 bis 25 Gew.-%, bezogen auf das Gesamtgewicht der Komponente b), an freien Diaminen b2) vor, wobei, wie bereits ausgeführt, diese freien Diamine auch ausschließlich aus dem bei der Herstellung der Komponente b3) eingesetzten Diaminüberschuß resultieren können. Es ist jedoch auch möglich, beim erfindungsgemäßen Verfahren solche Gemische b) einzusetzen, die ausschließlich aus den Einzelkomponenten b1) und b3) bestehen, d.h. die keine freien Diamine b2) enthalten. Allerdings ist dies weniger bevorzugt.

Die Reaktionsprodukte b3) weisen sowohl freie Aminogruppen als auch sekundäre Hydroxylgruppen auf. Es handelt sich im allgemeinen um Flüssigkeiten oder niedrigschmelzende Harze, die gegebenenfalls im Form von Lösungen in im Überschuß zum Einsatz gelangtem Diamin (ii) anfallen, und die ohne die geringsten Schwierigkeiten mit den übrigen Bestandteilen der Komponente b) zu klaren, einphasigen Gemischen abgemischt werden können. Die bevorzugten Reaktionsprodukte b3) weisen im allgemeinen ein (mittleres) Molekulargewicht von 450 bis 2000 auf. Im allgemeinen handelt es sich bei den Reaktionsprodukten b3) um Gemische von Isomeren (Verwendung von isomeren Diamingemischen) und/oder von Homologen (höhere Homologe werden beispielsweise bei Verwendung von Epoxidharzen mit einem gewissen Anteil an höheren Homologen und/oder bei einer teilweise ablaufenden Kettenverlängerungsreaktion während der Herstellung der Reaktionsprodukte b3) gebildet). Das (mittlere) Molekulargewicht der Reaktionsprodukte b3) könnte beispielsweise gelchromatographisch bestimmt werden.

Bei den erfindungsgemäß gegebenenfalls mitzuverwendenden Hifls- und Zusatzmitteln c) handelt es sich beispielsweise um c1) die bekannten, inneren Formtrennmittel des Standes der Technik. Geeignete innere Formtrennmittel sind beispielsweise in DE-OS 1 953 637, DE-OS 2 122 670, DE-OS 2 431 968 oder DE-OS 2 404 310 beschrieben. Hierzu gehören insbesondere die mindestens 25 aliphatische Kohlenstoffatome aufweisenden Salze von Fettsäuren mit mindestens 12 aliphatischen Kohlenstoffatomen und primären Mono-, Di- oder Polyaminen mit zwei und mehr Kohlenstoffatomen oder Amid-oder Estergruppen aufweisenden Amine, die mindestens eine primäre, sekundäre oder tertiäre Aminogruppe besitzen, gesättigte und/oder ungesättigte COOH- und/oder OH-Gruppen aufweisende Ester von mono-und/oder polyfunktionellen Carbonsäuren und polyfunktionellen Alkoholen mit OH-oder Säurezahlen von mindestens 5, esterartige Umsetzungsprodukte aus Ricinolsäure und langkettigen Fettsäuren, Salze aus Carbonsäuren und tertiären Aminen sowie natürliche und/oder synthetische Öle, Fette oder Wachse. Gut geeignet sind auch Estergruppen aufweisende Kondensationsprodukte von Ricinolsäure und ein- oder mehrwertigen Alkoholen mit einer Säurezahl von unter 5, wie sie beispielsweise in der DE-OS 3 436 163 beischrieben sind. Ebenfalls geeignet sind beispielsweise Umsetzungsprodukte aus Fettsäureestern und Polyisocyanaten (DE-OS 2 319 648), Umsetzungsprodukte aus reaktionsfähige Wasserstoffatome aufweisenden Polysiloxanen und Mono-und/oder Polyisocyanaten (DE-OS 2 363 452). Ester von Hydroxymethylgruppen aufweisenden Polysiloxanen mit Mono- und/oder Polycarbonsäuren (DE-OS 2 363 452) und Salze aus Aminogruppen enthaltenden Polysiloxanen und Fettsäuren (DE-OS 2 427 273 und 2 445 648).

Besonders bevorzugte innere Formtrennmittel sind jedoch Zinksalze von aliphatischen Monocarbonsäuren mit 8 bis 24, vorzugsweise 12 bis 18 Kohlenstoffatomen, in Kombination mit, die Löslichkeit der Zinksalze vermittelnden alphatischen Polyaminen mit primären, sekundären und/oder tertiären Aminogruppen. Derartige Trennmittelkompositionen werden beispielsweise in US-PS 4 581 386, GB-A-2 144 136 oder den deutschen Patentanmeldungen P 36 26 673.6 bzw. P 36 39 502.1 beschrieben.

Grundsätzlich können beliebige Gemische der beispielhaft genannten inneren Formtrennmittel eingesetzt werden. Die inneren Formtrennmittel werden im allgemeinen in Mengen von bis zu 15 Gew.-%, bezogen auf das Gewicht der Komponente b) mitverwendet. Im Falle der bevorzugten Verwendung der zuletztgenannten inneren Formtrennmittel auf Basis der Zinkcarboxylate werden diese im allgemeinen in solchen Mengen eingesetzt, die einem Anteil von 0,5 bis 10 Gew.-% der Zinksalze, bezogen auf das Gewicht der Komponente b), entsprechen.

Zu den gegebenenfalls mitzuverwendenden Hilfs- und Zusatzmitteln c) gehören auch c2) Katalysatoren, ohne deren Mitverwendung im Falle des Einsatzes von Hydroxylgruppen aufweisenden Verbindungen als wesentlichen Teil der Komponente b1) im allgemeinen kein Formteil mit kurzer Formstandzeit und technisch interessanten mechanischen Eigenschaften erhalten werden kann. Die Mitverwendung derartiger Katalysatoren ist jedoch oftmals dann entbehrlich, wenn die Verbindungen der Komponente b1) ausschließlich oder zum überwiegenden Teil Aminogruppen als gegenüber Isocyanatgruppen reaktionsfähige Gruppen aufweisen.

Zu den bevorzugten Katalysatoren gehören organische Zinnverbindungen wie z.B. Zinn(II)-salze von Carbonsäuren wie Zinn(II)-acetat, Zinn(II)-octoat, Zinn(II)-ethylhexoat und Zinn(II)-laurat und die Dialkyl-zinnsalze von Carbonsäuren, wie z.B. Dibutyl-zinndiacetat, Dimethylzinn-dilaurat, Dibutylzinn-dilaurat, Dibutyl-zinn-maleat oder Dioctylzinn-diacetat.

Als mitzuverwendende Katalysatoren kommen auch tertiäre Amine der an sich bekannten Art in Frage, z.B. Triethylamin, Tributylamin, N-Methyl-morpholin, N-Ethyl-morpholin, N-Cocomorpholin, N,N,N′,N′-Tetramethyl-ethylendiamin, 1,4-Diazabicyclo-(2,2,2)-octan, N-Methyl-N′-dimethylaminoethylpiperazin, N,N-Dimethylbenzylamin, Bis-(N,N-diethylaminoethyl)-adipat, N,N-Diethylbenzylamin, Pentamethyldiethylentriamin, N,N-Dimethylcyclohexylamin, N,N,N′,N′-Tetramethyl-1,3-butandiamin, 1,2-Dimethylimidazol und 2-Methyl-imidazol.

Bevorzugter Katalysator dieses Typs ist das 1,4-Diazabicyclo-(2,2,2)-octan.

Im Falle des Verwendung von Hydroxylgruppen aufweisenden Aufbaukomponenten b1) werden insbesondere die beispielhaft genannten Zinn-Katalysatoren allein oder zusammen mit den beispielhaft genannten Amin-Katalysatoren verwendet. Wie bereits ausgeführt, ist die Verwendung von Katalysatoren dann oftmals entbehrlich, wenn die Verbindungen der Komponente b1) ausschließlich oder überwiegend Aminogruppen als gegenüber Isocyanatgruppen reaktionsfähige Gruppen aufweisen. In diesem Fall können gegebenenfalls als Katalysatoren auch ausschließlich die beispielhaft genannten Amin-Katalysatoren Verwendung finden.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl Hanser Verlag, München 1966, z.B. auf den Seiten 96 bis 102 beschrieben.

Die Katalysatoren werden, falls überhaupt, in einer Menge von etwa 0,001 bis 10 Gew.-%, vorzugsweise 0,05 bis 1 Gew.-%, bezogen auf die Menge der Komponente b), eingesetzt.

Weitere, gegebenenfalls mitzuverwendende Hilfs- und Zusatzmittel c) sind c3) Treibmittel, die dann eingesetzt werden, wenn Formteile mit einer geschlossenen Oberfläche und einem zelligen Kern erhalten werden sollen. Unter einem "zelligen Kern" sind hierbei selbstverständlich nur mikrozellulare Strukturen und keine echten Schaumstoffe zu verstehen, da Formkörper mit einer echten Schaumstruktur eine unter 0,8 $g/cm^3$ liegende Dichte aufweisen würden. Geeignete Treibmittel sind z.B. Wasser ("chemisches Treibmittel", dessen Treibwirkung auf der Freisetzung von Kohlendioxid beruht) und/oder "physikalische Substanzen und/oder gelöste inerte Gase. Zu den leicht flüchtigen organischen Substanzen gehören, im Sinne der Isocyanat-Additionsreaktion inerte Verbindungen wie z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether. Geeignete inerte Gase sind z.B. Stickstoff, Luft, Kohlendioxid.

Eine Treibwirkung kann auch durch Zusatz von bei Temperaturen unter Abspaltung von Gasen, beispielsweise von Stickstoff, sich zersetzenden Verbindungen, z.B. Azoverbindungen wie Azoisobuttersäurenitrile, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510, beschrieben.

Zu den gegebenenfalls mitzuverwendenden Hilfs- und Zusatzmitteln c) gehören auch c4) oberflächenaktive Zusatzstoffe (Emulgatoren und Schaumstabilisatoren). Als Emulgatoren kommen z.B. die Natriumsalze von Ricinusölsulfaten oder auch von Fettsäuren oder Salze von Fettsäuren mit Aminen wie ölsaures Diethylamin oder stearinsaures Diethanolamin in Frage.

Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-PS 2 764 565 beschrieben.

Als weitere, gegebenenfalls mitzuverwendende Hilfs- und Zusatzmittel c) kommen auch c5) niedermolekulare, mehrwertige Alkohole in Betracht, die gegebenenfalls zur Modifizierung der Eigenschaften der Formkörper neben den aminischen Kettenverlängerungsmitteln der Komponente b) in Mengen bis zu 50 Äquivalentprozent, bezogen auf die gegenüber Isocyanatgruppen reaktionsfähigen Gruppen der Diamine der Komponente b), mitverwendet werden können. Hierzu gehören beispielsweise Ethylenglykol, Butandiol1,4, Hexamethylenglykol, Trimethylolpropan oder deren Gemische oder auch niedermolekulare, d.h. ein Molekulargewicht von unter 500 aufweisende Additionsprodukte von Alkylenoxiden insbesondere von Propylenoxid an derartige mehrwertige Alkohole oder auch an mehrwertige Amine wie z.B. Ethylendiamin oder Diethylentriamin.

Als weitere, gemäß einer bevorzugten Ausführungsform des erfindungsgemäßen Verfahrens vorzugsweise mitzuverwendende Hilfs- und Zusatzmittel c) sind c6) gegenüber Isocyanatgruppen inerte faserförmige Füllstoffe einer mittleren Länge von 0,01 bis 10, vorzugsweise 0,05 bis 5,00 mm, eines mittleren Durchmessers von 2 bis 5 µm, vorzugsweise 5 bis 30 µm, bei einem Verhältnis von mittlerer Länge zu mittlerem Durchmesser von 5000:1 bis 5:1, vorzugsweise 100:1 bis 5:1 oder um plättchenförmige, d.h. schuppige Füllstoffe eines mittleren Durchmessers von 0,1 bis 5 mm, vorzugsweise 0,3 bis 3,5 mm, einer mittleren Dicke von 0,01 bis 1, vorzugsweise 0,05 bis 0,2 mm bei einem Verhältnis von mittlerem Durchmesser zu mittlerer Dicke von 5:1 bis 500:1, vorzugsweise 25:1 bis 200:1. Grundsätzlich ist es auch möglich, jedoch nicht bevorzugt, sowohl faserförmige als auch schuppige Füllstoffe mitzuverwenden. Die Gesamtmenge der Füllstoffe c6) beträgt bis zu 100, vorzugsweise bis zu 50 Gew.-%, bezogen auf das Gewicht der Komponente b).

Beispiele für faserförmige Füllstoffe sind insbesondere Glasfasern, die gegebenenfalls mit geeigneten Haftvermittlern oder Schlichten behandelt worden sind, in geschnittener oder gemahlener Form, ferner Asbest-, Serpentin-, Kohlenstoff-, Aramid-, Crysotil- oder Eisenoxidfasern (nadelförmiges Eisenoxid).

Beispiele für schuppige Füllstoffe sind solche auf Basis von Schichtsilikaten, Talk, Glimmer, Phlogopit, Mica oder Flake-Glas.

Grundsätzlich wäre es auch möglich, beim erfindungsgemäßen Verfahren an sich bekannte körnige Füllstoffe wie z.B. solche auf Basis von Kalkspat, Schwerspat, Kaolin, Kreide, Silikaten, Aluminiumhydroxiden, Quarzmehl, gefällten Kieselsäuren, Ruß, Titandioxid, pyrogenen Kieselsäuren, Mikroglaskugeln, Metallpulvern, Korund, Schiefermehl, Blähton oder Zinkoxid einzusetzen. Der Einsatz derartiger Füllstoffe ist jedoch gegenüber den faserförmigen und plättchenförmigen Füllstoffen weniger bevorzugt.

Insbesondere bei Mitverwendung von Glasfasern der genannten Art ist die Herstellung von Formkörpern eines noch weiter erhöhten Biegemoduls möglich.

Die beispielhaft genannten, gegebenenfalls mitzuverwendenden Hilfs- und Zusatzmittel c) werden vor der Durchführung des erfindungsgemäßen Verfahrens im allgemeinen der Komponente b) einverleibt.

Bei der Durchführung des erfindungsgemäßen Verfahrens kommen die Ausgangskomponenten im allgemeinen in solchen Mengen zum Einsatz, daß im reaktionsfähigen Gemisch eine Isocyanat-Kennzahl von 70 bis 130, insbesondere 90 bis 110, vorliegt. Unter Isocyanat-Kennzahl versteht man hierbei den Quotienten aus Anzahl der Isocyanat-Gruppen und Anzahl der gegenüber Isocyanaten reaktiven Gruppen, multipliziert mit 100. Bei der Durchführung des erfindungsgemäßen Verfahrens wird nach der bekannten Reaktionsspritzgußtechnik (RSG-Verfahren) gearbeitet. Die Menge des in die Form eingebrachten, gegebenenfalls schäumfähigen Gemisches wird im übrigen so bemessen, daß der Formkörper eine Dichte von 0,8 bis 1,4 g/cm$^3$, vorzugsweise von 0,9 bis 1,2 g/cm$^3$, aufweist. Dichten von über 1,2 g/cm$^3$ können insbesondere dann auftreten, wenn beim erfindungsgemäßen Verfahren spezifisch schwere Zusatzmittel mitverwendet werden. Bei den beim erfindungsgemäßen Verfahren einzusetzenden Werkzeugen handelt es sich um die aus der Reaktionsspritzgußtechnik bekannten Vorrichtungen, wobei als Formen geschlossene Metallformen zum Einsatz gelangen, deren Innenwände gegebenenfalls mit "äußeren Formtrennmitteln" beispielsweise solchen auf Wachs-, Seifen- oder Silikonbasis beschichtet werden können.

Als Ausgangstemperatur des in die Form eingebrachten Gemisches wird eine Temperatur zwischen 10° und 70° C, vorzugsweise 30° bis 50° C, gewählt.

Die Werkzeugtemperatur, d.h. die Temperatur der Forminnenwand vor Befüllen der Form beträgt im allgemeinen 40 bis 100, vorzugsweise 50 bis 70° C.

Die resultierenden Formkörper können im allgemeinen nach einer Formstandzeit von 5 bis 90, vorzugsweise 20 bis 60 Sekunden, entformt werden.

Bei nach dem erfindungsgemäßen Verfahren erhaltenen Formkörper eignen sich insbesondere zur Herstellung von flexiblen Automobilstoßstangen bzw. Karosserieelementen. Durch geeignete Variation der Ausgangsverbindungen, insbesondere bei relativ geringem Anteil an Diamin b2) können z.B. auch flexible Schuhsohlen mit guten Abriebverhalten und ausgezeichneter mechanischer Festigkeit erhalten werden.

Die nachfolgenden Beispiele dienen zur weiteren Erläuterung der Erfindung.

Beispiel 1 (Herstellung eines Reaktionsproduktes b3))

15 kg DETDA (Mischung aus 65 Gew.-% 1-Methyl-3,5-diethylphenylendiamin-(2,4) und 35 Gew.-% 1-Methyl-3,5-diethylphenylendiamin-(2,6)) und 5 kg eines bei Raumtemperatur flüssigen Epoxidharzes (Diglycidylether von Bisphenol A, Epoxidäquivalentgewicht ca. 190 (werden vermischt und unter ständigem Rühren innerhalb 30 Minuten auf 110° C erwärmt. Ohne weitere Wärmezufuhr hält sich die Temperatur die Reaktionsmischung ca. 1 Stunde auf 110 bis 115° C. Nach weiteren 2 Stunden ist die Temperatur auf ca. 70° C abgefallen. Das entstandene Umsetzungsprodukt ist klar und hat bei 55° C eine Viskosität von 2400 mPas. Das Umsetzungsprodukt besteht im wesentlichen aus einer Lösung von 10 kg des Reaktionsprodukts aus DETDA und Epoxidharz in 10 kg überschüssigem DETDA. Die Hauptkomponente des Hydroxyl- und

Aminogruppen aufweisenden Reaktionsprodukts dürfte der Formel

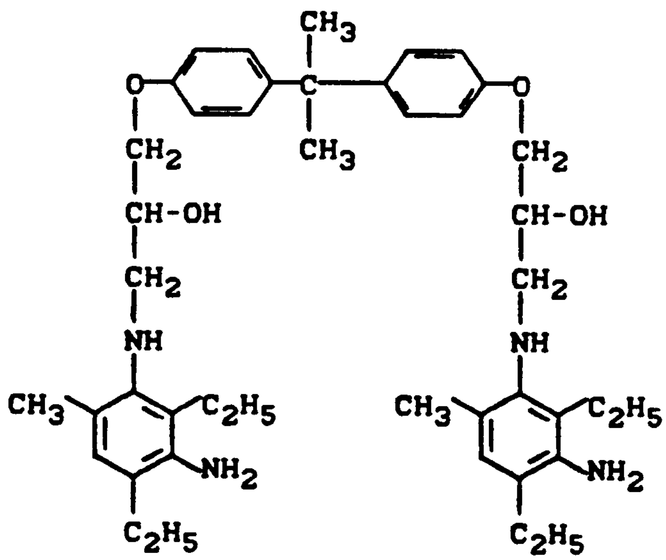

entsprechen, wobei neben der Verbindung dieser Formel selbstverständlich auch noch Isomere (z.B. Umsetzungsprodukte des 2,6-Diamins) und höhere Homologe (Umsetzungsprodukte von in geringen Anteilen in dem Epoxidharz vorliegenden Oligomeren) vorliegen.

Beispiele 2 und 4 (allgemeine Herstellungsvorschrift)

Die Verarbeitung der in den nachfolgenden Beispielen 2 bis 4 beschriebenen Rezepturen erfolgte mit Hilfe der Reaktionsspritzgußtechnik (RSG) oder englisch "reaction injection moulding" (RIM). Polyolgemisch und Polyisocyanat werden einem Hochdruckaggregat zugeführt und nach intensiver Vermischung in einem zwangsgesteuerten Mischkopf in kürzester Zeit in ein Metallwerkzeug gedrückt. Die Temperatur des Metallwerkzeuges (Aluminium-Plattenform der Abmessungen 30 x 20 x 0,4 cm) beträgt 65° C. Die Temperatur der Rohstoffe wird auf 45° C eingestellt, die Formstandzeit beträgt 30 sec. Das Metallwerkzeug wird mit einem handelsüblichen Trennmittel (RCTW 2006, Hersteller: Chem-Trend International 3205, Grand River Howell, Michigan 48643/USA) behandelt.

Beispiel 2

71,14 Gew.-Teile eines Polyethers der OH-Zahl 28, der durch Addition von Propylenoxid und anschließende Addition von Ethylenoxid an Trimethylolpropan erhalten wurde (Gewichtsverhältnis: PO:EO = 83:17)
28,46 Gew.-Teile des Umsetzungsprodukts aus Beispiel 1
0,30 Gew.-Teile 1,4-Diazabicyclo-(2,2,2)-octan als 33 %ige Lösung (®Dabco 33 LV, Air Products)
0,10 Gew.-Teile Dimethylzinndilaurat
werden zu einer klaren Polyolkomponente vereinigt und mit 62,3 Gew.-Teilen eines Umsetzungsproduktes aus Tripropylenglykol und 4,4'-Diphenylmethandiisocyanat (23 Gew.-% NCO) nach dem RSG-Verfahren verarbeitet. Der erhaltene Formkörper wird bei 120° C 45 Minuten getempert. An der Testplatte werden danach die folgenden mechanischen Werte ermittelt:

| | | | |
|---|---|---|---|
| Rohdichte (DIN 53 420) | | 1119 | $kg/m^3$ |
| Zugfestigkeit (DIN 53 504) | | 33,4 | MPa |
| Bruchdehnung (DIN 53 504) | | 149 | % |
| Weiterreißfestigkeit ohne Einschnitt (DIN 53 515) | | 43,8 | kN/m |
| Shore D (DIN 53 505) | | 62 | |
| G'-Modul (DIN 53 445) | +100° C | 68 | MPa |
| | +65° C | 99 | MPa |
| | +20° C | 172 | MPa |
| | -30° C | 431 | MPa |
| Biegemodul | RT | 433 | MPa |
| (ASTM-D 790-71) | +120° C | 156 | MPa |
| sag-Test (1h/160° C) 100 mm Überhang | | 23,3 | mm |

Beispiel 3

62,31 Gew.-Teile eines Polyethers der OH-Zahl 28, der durch Addition von Propylenoxid und anschließende Addition von Ethylenoxid an Trimethylolpropan erhalten wurde (Gewichtsverhältnis PO:EO 0 83:17)
24,90 Gew.-Teile des Umsetzungsprodukts aus Beispiel 1
6,74 Gew.-Teile einer Mischung aus 65 Gew.-Teilen 1-Methyl-3,5-diethylphenylendiamin-(2,4) und 35 Teilen 1-Methyl-3,5-diethylphenylendiamin
0,26 Gew.-Teile 1,4-Diazabicyclo-(2,2,2)-octan als 33 %ige Lösung (®Dabco 33 LV, Air Products)
0,18 Gew.-Teile Dimethylzinndilaurat
2,00 Gew.-Teile eines Esters aus 7 Mol Ricinolsäure und 1 Mol Hexandiol-1,6 (Säurezahl ca. 2,0, Hydroxylzahl ca. 35)
und
3,60 Gew.-Teilen einer Lösung von 1,8 Gew.-Teilen Zinkstearat (Haro Chem ZGD, Hersteller: Haagen Chemie b.V. 6040 AA Roermond (Holland)) in 1,8 Gew.-Teilen einer Mischung aus 50 Gew.-% eines Amin-gestarteten Poly(oxyalkylen)-polyether-Tetrols mit einer OH-Zahl von ca. 630, erhalten durch Addition von ca. 5 Mol Propylenoxid auf ein Mol Ethylendiamin
werden zu einer klaren Polyolkomponente vereinigt und mit 73,0 Gew.-Teilen eines Umsetzungsproduktes aus Tripropylenglykol und 4,4'-Diphenylmethandiisocyanat (23 Gew.-% NCO) nach dem RSG-Verfahren verarbeitet.

Der erhaltene Formkörper wird bei 120° C 45 Minuten getempert. An der Testplatte werden danach die folgenden mechanischen Werte ermittelt:

| | | | |
|---|---|---|---|
| Rohdichte (DIN 53 420) | | 1133 | $kg/m^3$ |
| Zugfestigkeit (DIN 53 504) | | 39,3 | MPa |
| Bruchdehnung (DIN 53 504) | | 139 | % |
| Weiterreißfestigkeit ohne Einschnitt (DIN 53 515) | | 24,8 | kN/m |
| Shore D (DIN 53 505) | | 68 | |
| G'-Modul (DIN 53 445) | +100° C | 103 | MPa |
| | +65° C | 145 | MPa |
| | +20° C | 239 | MPa |
| | -30° C | 513 | MPa |
| Biegemodul | RT | 670 | MPa |
| (ASTM-D 790-71) | +120° C | 252 | MPa |
| sag-Test (1h/160° C) 100 mm Überhang | | 10 | mm |

Mit der gleichen Rezeptur wird eine Prüfung des Trennverhaltens durchgeführt.

Das Werkzeug - eine Schüsselform aus Werkzeugstahl - erlaubt die Herstellung eines Formteils der folgenden Abmessungen:

| | |
|---|---|
| Außendurchmesser Boden | 178 mm |
| Außendurchmesser Rand | 186 mm |
| Wandstärke | 4 mm |
| Formteilhöhe | 68 mm |
| Konizität | 3,50° |
| Anguß: Quellanguß, mittig am Boden (ø = 10 mm) | |

Bei Entformung der Schüssel sind an den Wandflächen starke Scherkräfte zu überwinden. Zur Bestimmung der Aufreißkräfte dient ein Kraftaufnehmer mit Dehnungsmeßstreifen als Meßelement (Fa. Hottinger Baldwin Meßtechnik GmbH, D-6100 Darmstadt 1).

Die Temperatur der Rohstoffe beträgt 45° C, die Temperature des Werkzeugs 65° C. Die Formstandzeit wird auf 20 sec und die Taktzeit auf 60 sec eingestellt.

Die Werkzeugoberfläche wird vor Herstellung des ersten Formteils mit dem in Beispiel 2 genannten, handelsüblichen Trennmittel behandelt.

Nach 50 Reaktionszyklen (Herstellung von 50 Schüsseln ohne weitere Vorbehandlung der Werkzeugoberfläche) wird die Versuchsreihe abgebrochen. Bei der ersten Entformung wird eine Aufreißkraft von 4,0 kN und bei der letzten Entformung eine Aufreißkraft von 6,3 kN gemessen.

## Beispiel 4

100 Gew.-Teile der Polyolkomponente aus Beispiel 3 werden mit 43,3 Gew.-Teilen handelsüblicher Glasfasern (MF 7901, Hersteller: Bayer AG, 5090 Leverkusen) vermischt. 100 Gew.-Teile dieser Polyol/Glasfaser-Mischung werden mit 51 Gew.-Teilen eines Umsetzungsprodukts aus Tripropylenglykol und 4,4'-Diphenylmethandiisocyanat (23 Gew.-% NCO) verarbeitet.

Das Stahl-Plattenwerkzeug der Abmessungen 38 x 20 x 0,4 cm wird hierbei auf 65° C temperiert, die Temperatur die Rohstoffe beträgt 45° C, die Formstandzeit wird auf 30 sec eingestellt.

Der erhaltene Formkörper wird bei 120° C 45 Minuten getempert. An der Testplatte werden danach die folgenden mechanischen Werte ermittelt:

| | | | |
|---|---|---|---|
| Rohdichte (DIN 53 420) | | 1285 | $kg/m^3$ |
| Zugfestigkeit (DIN 53 504) | | 32,8 | MPa |
| Bruchdehnung (DIN 53 504) | | 37 | % |
| Weiterreißfestigkeit ohne Einschnitt (DIN 53 515) | | 63,4 | kN/m |
| Shore D (DIN 53 505) | | 73 | |
| G'-Modul (DIN 53 445) | +100° C | 176 | MPa |
| | +65° C | 223 | MPa |
| | +20° C | 353 | MPa |
| | -30° C | 606 | MPa |
| Biegemodul | RT | 1906 | MPa |
| (ASTM-D 790-71) | +120° C | 962 | MPa |
| sag-Test (1h/160° C) 150 mm Überhang | | 19 | mm |

## Patentansprüche

1. Verfahren zur Herstellung von elastomeren Formkörpern auf Polyurethan- oder Polyharnstoff-Basis des Dichtebereichs 0,8 bis 1,4 $g/cm^3$ durch Umsetzung in geschlossenen Formen eines Reaktionsgemischs bestehend aus
   a) einer Polyisocyanatkomponente, bestehend aus mindestens einem Di- oder Polyisocyanat mit ausschließlich aromatisch gebundenen Isocyanatgruppen,
   b) einem Gemisch von Verbindungen mit gegenüber Isocyanatgruppen reaktionsfähigen Gruppen enthaltend
      b1) Polyalkylenpolyether oder Polyalkylenpolyether gemische mit einem zahlenmittleren Molekulargewicht zwischen 1800 und 12000, welche mindestens zwei gegenüber Isocyanatgruppen reaktionsfähige Gruppen aufweisen und
      b2) gegebenenfalls mindestens ein Diamin mit zwei primären und/oder sekundären, aromatisch gebundenen Aminogruppen des Molekulargewichtsbereichs 108 bis 400,
   und
   c) gegebenenfalls weitere an sich bekannte Hilfs-und Zusatzmittel, mit der Maßgabe, daß im Falle der Verwendung von Hydroxylgruppen aufweisenden Aufbaukomponenten b1) Katalysatoren in einer Menge von 0,001 bis 10 Gew.-%, bezogen auf die Menge der Komponente b) eingesetzt werden, und wobei im Falle der Mitverwendung von Füllstoffen als Komponente c) oder als Teil der Komponente c) diese in einer Menge von bis zu 100 Gew.-% der Komponente b) zum Einsatz gelangen,
   wobei die Komponenten a) bis c) als one-shot-System nach der Reaktionsspritzgußtechnik unter Einhaltung einer Isocyanatkennzahl von 70 bis 130 verarbeitet werden, dadurch gekennzeichnet, daß die Komponente b) als weiteren Bestandteil
      b3) mindestens ein Reaktionsprodukt von
         (i) mindestens einem Polyepoxid des Epoxidäquivalentgewichtsbereichs 76 bis 550 welches mindestens zwei Epoxidgruppen aufweist
         mit
         (ii) mindestens einem aromatischen Diamin der unter b2) genannten Art enthält,
      wobei bei der Herstellung dieses Reaktionsprodukts pro Mol Epoxidgruppen der Komponente (i) mindestens 1 Mol Diamin (ii) eingesetzt worden sind, und wobei die Komponente b3) in einer solchen Menge verwendet wird, die einen Anteil der Epoxidverbindung (i), bezogen auf das Gesamtgewicht der Komponente b) von 0,5 bis 25 Gew.-% entspricht.

**2.** Verfahren gemäß Anspruch 1, dadurch gekennzeichnet, daß man als Komponente b1) Polyetherpolyole verwendet, die (im statistischen Mittel) zwei bis drei alkoholische Hydroxylgruppen aufweisen, die ihrerseits zumindest zu 50 % aus primären Hydroxylgruppen bestehen.

**3.** Verfahren gemäß Anspruch 1 und 2, dadurch gekennzeichnet, daß man als Komponente b2) und als Komponente (ii) zur Herstellung der Komponente b3) aromatische Diamine verwendet, die zumindest in jeweils einer ortho-Stellung zu den Aminogruppen einen Alkylsubstituenten aufweisen, und deren Reaktiviät nicht durch Elektronen-ziehende Substituenten herabgesetzt ist.

**4.** Verfahren gemäß Anspruch 1 bis 3, dadurch gekennzeichnet, daß man als Komponente b2) und als Komponente (ii) zur Herstellung der Komponente b3) 1-Methyl-3,5-diethyl-2,4-diaminobenzol oder eine bei Raumtemperatur flüssige Mischung aus diesem mit 1-Methyl-3,5-diethyl-2,6-diaminobenzol verwendet.

**5.** Verfahren gemäß Anspruch 1 bis 4, dadurch gekennzeichnet, daß man solche Komponenten b) verwendet, in denen der Gewichtsanteil der freien und in der Komponente b3) chemisch gebundenen aromatischen Diamine, bezogen auf das Gesamtgewicht der Komponente b) bei 5 bis 50 Gew.-% liegt.

**6.** Verfahren gemäß Anspruch 1 bis 5, dadurch gekennzeichnet, daß man als Komponente c) innere Formtrennmittel bestehend aus Zinksalzen von aliphatischen Monocarbonsäuren mit 8 bis 24 Kohlenstoffatomen in Kombination mit, die Löslichkeit der Zinksalze vermittelnden aliphatischen Polyaminen mit primären, sekundären und/oder tertiären Aminogruppen gegebenenfalls zusammen mit weiteren Hilfs-und Zusatzmitteln verwendet.

**7.** Verfahren gemäß Anspruch 1 bis 6, dadurch gekennzeichnet, daß man als Komponente c) an sich bekannte Katalysatoren für die Isocyanat-Polyadditionsreaktion in einer Menge von 0,05 bis 1 Gew.-%, bezogen auf die Menge der Komponente b), gegebenenfalls zusammen mit weiteren Hilfs-und Zusatzmitteln verwendet.

**8.** Verfahren gemäß Anspruch 1 bis 7, dadurch gekenn-zeichnet, daß man als Komponente c) Glasfasern als Füllstoffe in einer Menge von bis zu 50 Gew.-%, bezogen auf das Gewicht der Komponente b) gegebenenfalls neben weiteren Hilfs- und Zusatzmitteln c) verwendet.

**9.** Zur Durchführung des Verfahrens gemäß Anspruch 1 bis 8 geeignete Gemische enthaltend

b) ein Gemisch von Verbindungen mit gegenüber Isocyanatgruppen reaktionsfähigen Gruppen enthaltend

b1) Polyalkylenpolyether oder Polyalkylenpolyether gemische mit einem zahlenmittleren Molekulargewicht zwischen 1800 und 12000 welche mindestens zwei gegenüber Isocyanatgruppen reaktionsfähige Gruppen aufweisen und

b2) gegebenenfalls mindestens ein Diamin mit zwei primären und/oder sekundären, aromatisch gebundenen Aminogruppen des Molekulargewichtsbereichs 108 bis 400,

und

c) gegebenenfalls weitere an sich bekannte Hilfs- und Zusatzmittel, mit der Maßgabe, daß im Falle des Vorliegens von Hydroxylgruppen aufweisenden Aufbaukomponenten b1) Katalysatoren in einer Menge von 0,001 bis 10 Gew.-%, bezogen auf die Menge der Komponente b) eingesetzt werden, und wobei im Falle des Vorliegens von Füllstoffen als Komponente c) oder als Teil der Komponente c) diese in einer Menge von bis zu 100 Gew.-% der Komponente b) zum Einsatz gelangen,

wobei die Komponenten a) bis c) als one-shot-System nach der Reaktionsspritzgußtechnik unter Einhaltung einer Isocyanatkennzahl von 70 bis 130 verarbeitet werden, dadurch gekennzeichnet, daß die Komponente b) als weiteren Bestandteil

b3) mindestens ein Reaktionsprodukt von

(i) mindestens einem Polyepoxid des Epoxidäquivalentgewichtsbereichs 76 bis 550 welches mindestens zwei Epoxidgruppen aufweist

mit

(ii) mindestens einem aromatischen Diamin der unter b2) genannten Art enthält,

wobei bei der Herstellung dieses Reaktionsprodukts pro Mol Epoxidgruppen der Komponente (i) mindestens 1 Mol Diamin (ii) eingesetzt worden sind, und wobei die Komponente b3) in ainer solchen Menge verwendet wird, die einem Anteil der Epoxidverbindung (i), bezogen auf das

Gesamtgewicht der Komponente b) von 0,5 bis 25 Gew.-% entspricht.

**10.** Gemäß Anspruch 1 bis 8 erhaltene Formkörper.

## Claims

**1.** A process for the production of elastomeric mouldings based on polyurethanes or polyureas in the density range of from 0.8 to 1.4 g/cm$^3$ by the reaction, inside closed moulds, of a reaction mixture consisting of

a) a polyisocyanate component consisting of at least one di- or polyisocyanate having exclusively aromatically bound isocyanate groups,

b) a mixture of compounds containing isocyanate reactive groups, comprising

b1) polyalkylene polyethers or polyalkylene polyether mixtures having a number average molecular weight of from 1800 to 12,000, containing at least two isocyanate reactive groups, and

b2) optionally at least one diamine in the molecular weight range of from 108 to 400 having two primary and/or secondary aromatically bound amino groups, and

c) optionally other auxiliary agents and additives known per se,

under the condition that when starting components b1) containing hydroxyl groups are used, catalysts are used in a quantity of from 0.001 to 10% by weight, based on the quantity of component b), and when fillers are used as component c) or as part of component c), these are used in a quantity of up to 100% by weight of component b),

components a) to c) being worked up as a one-shot system by the reaction injection moulding technique in which an isocyanate index of from 70 to 130 is maintained, characterised in that component b) contains, as further constituent,

b3) at least one reaction product of

(i) at least one polyepoxide in the equivalent weight range of from 76 to 550 containing at least two epoxide groups with

(ii) at least one aromatic diamine of the type mentioned under b2),

at least one mol of diamine (ii) having been used per mol of epoxide groups of component (i) for the preparation of this reaction product and component b3) being used in a quantity corresponding to a proportion of epoxide compound (i), based on the total weight of component b), of from 0.5 to 25% by weight.

**2.** A process according to Claim 1, characterised in that the compounds used as component b1) are polyether polyols containing (on statistical average) two to three alcoholic hydroxyl groups at least 50% of which groups are primary hydroxyl groups.

**3.** A process according to Claims 1 and 2, characterised in that the compounds used as component b2) and as component (ii) for the preparation of component b3) are aromatic diamines which carry an alkyl substituent in at least one ortho-position to the amino groups and the reactivity of which is not reduced by electron attracting substituents.

**4.** A process according to Claims 1 to 3, characterised in that the compound used as component b2) and as component (ii) for the preparation of component b3) is 1-methyl-3,5-diethyl-2,4-diaminobenzene or a mixture, which is liquid at room temperature, of the aforesaid compound with 1-methyl-3,5-diethyl-2,6-diaminobenzene.

**5.** A process according to Claims 1 to 4, characterised in that the compounds used as component b) are such that the proportion by weight of free aromatic diamines and aromatic diamines chemically bound in component b3) is in the range of from 5 to 50% by weight, based on the total weight of component b).

**6.** A process according to Claims 1 to 5, characterised in that the substances used as component c) are internal mould release agents consisting of zinc salts of aliphatic monocarboxylic acids containing 8 to 24 carbon atoms in combination with aliphatic polyamines containing primary, secondary and/or tertiary amino groups, which polyamines impart solubility to the zinc salts, optionally together with other auxiliary agents and additives.

7. A process according to Claims 1 to 6, characterised in that the substances used as component c) are known catalysts for the isocyanate polyaddition reaction, used in a quantity of from 0.05 to 1% by weight, based on the quantity of component b), optionally together with other auxiliary agents and additives.

8. A process according to Claims 1 to 7, characterised in that the substances used as component c) are glass fibres serving as fillers in a quantity of up to 50% by weight, based on the weight of component b), optionally together with other auxiliary agents and additives c).

9. Mixtures suitable for carrying out the process according to Claims 1 to 8, containing
b) a mixture of compounds containing isocyanate reactive groups containing
b1) polyalkylene polyethers or polyalkylene polyether mixtures having a number average molecular weight of from 1800 to 12,000, which have at least two isocyanate reactive groups, and
b2) optionally at least one diamine in the molecular weight range of from 108 to 400 having two primary and/or secondary aromaticcally bound amino groups and
c) optionally other known auxiliary agents and additives, under the condition that when starting components b1) containing hydroxyl groups are present, catalysts are used in a quantity of from 0.001 to 10% by weight, based on the quantity of component b), and when fillers are present as component c) or as part of component c), these are used in a quantity of up to 100% by weight of component b),
components a) to c) being worked up as a one-shot system by the reaction injection moulding technique maintaining an isocyanate index of from 70 to 130, characterised in that component b) contains, as further constituent,
b3) at least one reaction product of
(i) at least one polyepoxide in the epoxide equivalent weight range of from 76 to 550 containing at least two epoxide groups with
(ii) at least one aromatic diamine of the type mentioned under b2),
at least one mol of diamine (ii) having been used per mol of epoxide groups of component (i) for the preparation of this reaction product and component b3) being used in a quantity corresponding to a proportion of epoxide compound (i), based on the total weight of component b), of from 0.5 to 25% by weight.

10. Mouldings obtained according to Claims 1 to 8.

## Revendications

1. Procédé pour la fabrication de corps moulés élastomères à base de polyuréthannes ou de polyurées, de densité 0,8 à 1,4 g/cm$^3$ par réaction dans des moules fermés d'un mélange consistant en :
a) un composant polyisocyanate consistant en au moins un di- ou poly-isocyanate à groupes isocyanate exclusivement à liaisons aromatiques,
b) un mélange de composés à groupes réactifs avec les groupes isocyanate, contenant :
b1) un polyalkylène-polyéther ou un mélange de polyalkylène-polyéthers de poids moléculaire (moyenne en nombre) 1 800 à 12 000, contenant au moins deux groupes réactifs avec les groupes isocyanate, et
b2) éventuellement au moins une diamine à deux groupes amino primaires et/ou secondaires à liaisons aromatiques, de poids moléculaire 108 à 400, et
c) le cas échéant d'autres produits auxiliaires et additifs connus en soi, sous réserve que, dans le cas où on utilise des composants de synthèse b1) contenant des groupes hydroxy, on utilise des catalyseurs en quantités de 0,001 à 10 % en poids par rapport à la quantité du composant b), et dans le cas où on utilise conjointement des matières de charge en tant que composant c) ou en tant que partie du composant c), on utilise ces matières de charge en quantité allant jusqu'à 100 % du poids du composant b),
les composants a) à c) étant travaillés en tant que système "one-shot" par la technique de moulage réactif par injection avec maintien d'un indice d'isocyanates de 70 à 130,
caractérisé en ce que le composant b) contient entant qu'autres constituants :
b3) au moins un produit de réaction de :
i) au moins un polyépoxyde dont le poids équivalent d'époxyde va de 76 à 550 et contenant au moins deux groupes époxyde, avec

ii) au moins une diamine aromatique du type mentionné sous b2), ce produit de réaction ayant été préparé avec l'utilisation d'au moins 1 mol de la diamine (ii) par mol de groupes époxyde du composant (i), le composant b3) étant utilisé en quantité correspondant à une proportion du composé époxydique (i) de 0,5 à 25 % du poids total du composant b).

**2.** Procédé selon la revendication 1, caractérisé en ce que l'on utilise en tant que composant b1) des polyéther-polyols contenant (en moyenne statistique) deux à trois groupes hydroxy alcooliques consistant eux-mêmes pour au moins 50 % en groupes hydroxy primaires.

**3.** Procédé selon les revendications 1 et 2, caractérisé en ce que l'on utilise en tant que composant b2) et en tant que composant (ii) pour la préparation du composant b3) des diamines aromatiques portant au moins un substituant alkyle dans une position ortho de chaque groupe amino et dont la réactivité n'est pas amoindrie par des substituants accepteurs d'électrons.

**4.** Procédé selon les revendications 1 à 3, caractérisé en ce que l'on utilise en tant que composant b2) et en tant que composant (ii) pour la préparation du composant b3) le 1-méthyl-3,5-diéthyl-2,4-diaminobenzène ou un mélange, liquide à température ambiante, de ce composé avec le 1-méthyl-3,5-diéthyl-2,6-diaminobenzène.

**5.** Procédé selon les revendications 1 à 4, caractérisé en ce que l'on utilise des composants b) dans lesquels la proportion en poids des diamines aromatiques libres et combinées chimiquement dans le composant b3) va de 5 à 50 % en poids par rapport au poids total du composant b).

**6.** Procédé selon les revendications 1 à 5, caractérisé en ce que l'on utilise en tant que composant c) des agents de démoulage internes consistant en sels de zinc d'acides monocarboxyliques aliphatiques en $C_8$-$C_{24}$ en combinaison avec des polyamines aliphatiques à groupes amino primaires, secondaires et/ou tertiaires conférant la solubilité aux sels de zinc et le cas échéant d'autres produits auxiliaires et additifs.

**7.** Procédé selon les revendications 1 à 6, caractérisé en ce que l'on utilise en tant que composant c) des catalyseurs connus en soi pour la réaction de polyaddition des isocyanates en quantité de 0,05 à 1 % du poids du composant b), le cas échéant avec d'autres produits auxiliaires et additifs.

**8.** Procédé selon les revendications 1 à 7, caractérisé en ce que l'on utilise en tant que composant c) des fibres de verre en tant que matières de charge, en quantité allant jusqu'à 50 % du poids du composant b), éventuellement avec d'autres produits auxiliaires et additifs c).

**9.** Mélanges convenant pour la mise en oeuvre du procédé selon les revendications 1 à 8, contenant :

b) un mélange de composés à groupes réactifs à l'égard des groupes isocyanate contenant lui-même :

b1) des polyalkylène-polyéthers ou mélanges de polyalkylène-polyéthers de poids moléculaire (moyenne en nombre) 1 800 à 12 000, à au moins deux groupes réactifs à l'égard des groupes isocyanate, et

b2) le cas échéant au moins une diamine à deux groupes amino primaires et/ou secondaires à liaisons aromatiques, de poids moléculaire 108 à 400, et

c) le cas échéant d'autres produits auxiliaires et additifs connus en soi, sous réserve que, dans le cas de la présence de composants de synthèse b1) contenant des groupes hydroxy, on utilise des catalyseurs en quantité de 0,01 à 10 % en poids du composant b) et dans le cas de la présence de matières de charge en tant que composant c) ou partie du composant c), ces matières de charge sont utilisées en quantité allant jusqu'à 100 % du poids du composant b),

les composants a) à c) étant travaillés en tant que système "one-shot" par la technique de moulage réactif par injection avec maintien d'un indice d'isocyanate de 70 à 130, caractérisés en ce que le composant b) contient en tant qu'autre constituant :

b3) au moins un produit de réaction de :

i) au moins un polyépoxyde de poids équivalent d'époxyde 76 à 550, à au moins deux groupes époxyde, avec

ii) au moins une diamine aromatique du type mentionné sous b2), ce produit de réaction ayant été préparé par utilisation d'au moins 1 mol de diamine (ii) par mol de groupes époxyde du

composant (i), et le composant b3) étant utilisé en quantité correspondant à une proportion du composé époxydique (i) de 0,5 à 25 % du poids total du composant b).

**10.** Corps moulés obtenus selon les revendications 1 à 8.